# EUROPEAN PATENT APPLICATION

(11) **EP 4 161 150 A1**
(43) Date of publication of application: **05.04.2023**
(21) Application number: 21831546.3
(22) Date of filing: 09.06.2021
(51) Int. Cl.: H04W 36/00

(54) **TARGET CELL DETERMINATION METHOD AND APPARATUS, AND STORAGE MEDIUM**

(30) Priority: 29.06.2020 CN 202010605477
(71) Applicant: Huawei Technologies Co., Ltd., Longgang District, Shenzhen, Guangdong 518129 (CN)
(72) Inventor: YANG, Shuigen, Shenzhen, Guangdong 518129 (CN); JIN, Yinghao, Shenzhen, Guangdong 518129 (CN)
(74) Representative: Epping - Hermann - Fischer
(86) International application number: PCT/CN2021/099247
(87) International publication number: WO 2022/001611

(57) **Abstract**

This application discloses a target cell determining method, a communication apparatus, and a storage medium, and relates to the communication field. In the method, a first radio access network device may receive load prediction information of at least one first cell from a first network device, and determine a target cell in the at least one first cell based on the load prediction information of the at least one first cell. The first cell is a cell controlled by another radio access network device. The load prediction information may include at least one of a quantity of terminals accessing the first cell in a first time period, a setup success rate of a protocol data unit PDU session in the first cell in the first time period, and a handover success rate of the first cell in the first time period. According to the method, a handover success rate of a terminal can be improved, thereby ensuring quality of service of the terminal.

## Description

This application claims priority to Chinese Patent Application No. 202010605477.8, filed with the China National Intellectual Property Administration on June 29, 2020 and entitled "TARGET CELL DETERMINING METHOD, COMMUNICATION APPARATUS, AND STORAGE MEDIUM", which is incorporated herein by reference in its entirety.

### TECHNICAL FIELD

Embodiments of this application relate to the communication field, and in particular, to a target cell determining method, a communication apparatus, and a storage medium.

### BACKGROUND

In a mobile communication system, a serving cell of user equipment (user equipment, UE) in a radio resource control (radio resource control, RRC) connected state may be changed, to provide a continuous and uninterrupted communication service for the UE. For example, in a movement process of the UE, quality of a signal received by the UE from the serving cell gradually becomes worse, and quality of a signal received by the UE from a target cell to which the UE gradually approaches gradually becomes better. When the quality of the signal received by the UE from the target cell is higher than the quality of the signal from the serving cell by a threshold, the UE may be handed over to the target cell. Alternatively, the UE may be handed over from a current serving cell to another cell in consideration of load balancing between different cells. For example, when load of the serving cell that the UE currently accesses is excessively high, the UE may alternatively be handed over to another target cell with low load.

In a conventional technology, neighboring base stations may exchange load information of respective corresponding cells. When handing over UE, a source base station corresponding to a current cell accessed by the UE may select, based on load information of other cells corresponding to the neighboring base stations, a target cell with low load for the UE from the other cells corresponding to the neighboring base stations, and then hand over the UE to the target cell.

However, in the foregoing manner in which the source base station selects, based on the load information exchanged between the neighboring base stations, the target cell for the UE from the other neighboring cells corresponding to the neighboring base stations, and hands over the UE to the target cell, a moment at which the load information of the cells is exchanged between the base stations is earlier than a moment at which the UE is handed over by the source base station. As a result, the load information of the neighboring cells cannot reflect actual load statuses of the neighboring cells when the UE is handed over, and the target cell selected by the source base station may be inappropriate. For example, the UE may be unsuccessfully handed over to the target cell because actual load of the target cell has reached an upper limit at a moment at which the UE is handed over In view of this, the existing manner of determining the target cell based on the load information exchanged between the neighboring base stations is inaccurate, and a handover success rate of a terminal is low.

### SUMMARY

Embodiments of this application provide a target cell determining method, a communication apparatus, and a storage medium, to improve a handover success rate of a terminal.

According to a first aspect, an embodiment of this application provides a target cell determining method. The method includes: A first radio access network device receives load prediction information of at least one first cell from a first network device, where the first cell is a cell controlled by another radio access network device; and the load prediction information includes at least one of a quantity of terminals accessing the first cell in a first time period, a setup success rate of a protocol data unit PDU session in the first cell in the first time period, and a handover success rate of the first cell in the first time period. The first radio access network device determines a target cell in the at least one first cell based on the load prediction information of the at least one first cell.

In the target cell determining method, the load prediction information can reflect at least one of the quantity of terminals accessing the first cell in the first time period, the setup success rate of the PDU session in the first cell in the first time period, and the handover success rate of the first cell in the first time period. Therefore, when the first radio access network device needs to hand over a serving cell for a terminal in the first time period or before the first time period, the first radio access network device determines, in the at least one first cell based on the load prediction information of the at least one first cell from the first network device, a target cell that is to be handed over, to make the determined target cell more appropriate, thereby improving a handover success rate of the terminal, and ensuring quality of service of the terminal.

In a possible design, when the load prediction information includes two or more of the quantity of terminals accessing the first cell in the first time period, the setup success rate of the protocol data unit PDU session in the first cell in the first time period, and the handover success rate of the first cell in the first time period, the first radio access network device may preferentially select, based on preconfigured priorities of different load prediction information, load prediction information with a higher priority as a determining basis for determining the target cell in the at least one first cell.

In another possible design, when the load prediction information includes two or more of the quantity of terminals accessing the first cell in the first time period, the setup success rate of the protocol data unit PDU session in the first cell in the first time period, and the handover success rate of the first cell in the first time period, the first radio access network device may calculate a weighted average value or a sum result of different load prediction information based on preconfigured weight values or other weighted indicators of the different load prediction information. Then, the first radio access network device may use the weighted average value or the sum result obtained through calculation as a determining basis for determining the target cell in the at least one first cell.

In a possible design, the load prediction information further includes a confidence level of the load prediction information.

In this design, when determining the target cell in the at least one first cell based on the load prediction information of the at least one first cell, the first radio access network device may further consider the confidence level of the load prediction information. When two or more first cells have same load prediction information, the first radio access network device may further select, based on the confidence level of the load prediction information, a first cell corresponding to load prediction information with a highest confidence level as the target cell, to further ensure the handover success rate of the terminal.

In a possible design, the first network device is any one of a core network device, a second radio access network device, and a network control device.

In a possible design, before that a first radio access network device receives load prediction information of at least one first cell from a first network device, the method further includes: The first radio access network device sends a load prediction request to the first network device, where the load prediction request includes the first time period.

Correspondingly, the first radio access network device may receive the load prediction information, of the at least one first cell, that is sent by the first network device based on the load prediction request.

In a possible design, the load prediction request further includes a cell identifier of the at least one first cell.

In this design, the cell identifier is added to the load prediction request, so that the first radio access network device may specifically request, by using the load prediction request, the first network device to obtain load prediction information of several specific cells in cells controlled by another radio access network device. This can prevent the first network device from sending unnecessary load prediction information of a cell to the first radio access network device, to reduce signaling overheads.

In a possible design, the load prediction request further includes a load item, and the load item is used to indicate the load prediction information that the first radio access network device requests to obtain.

For example, the load item may be used to indicate that the load prediction information that the first radio access network device requests to obtain is specifically one or more of the quantity of terminals accessing the first cell in the first time period, the setup success rate of the PDU session in the first cell in the first time period, and the handover success rate of the first cell in the first time period.

In another possible design, that a first radio access network device receives load prediction information of at least one first cell from a first network device may include: The first radio access network device receives the load prediction information, of the at least one first cell, that is actively sent by the first network device.

For example, the first network device may actively send the load prediction information of the at least one first cell to the first radio access network device based on a preset periodicity.

According to a second aspect, an embodiment of this application provides a communication apparatus. The apparatus has a function of implementing the method according to the first aspect. The function may be implemented by hardware, or may be implemented by executing corresponding software by hardware. The hardware or the software includes one or more units or modules corresponding to the function of the method according to the first aspect, for example, a receiving unit and a determining unit.

The receiving unit may be configured to receive load prediction information of at least one first cell from a first network device, where the first cell is a cell controlled by another radio access network device; and the load prediction information includes at least one of a quantity of terminals accessing the first cell in a first time period, a setup success rate of a protocol data unit PDU session in the first cell in the first time period, and a handover success rate of the first cell in the first time period. The determining unit may be configured to determine a target cell in the at least one first cell based on the load prediction information of the at least one first cell.

In a possible design, when the load prediction information includes two or more of the quantity of terminals accessing the first cell in the first time period, the setup success rate of the protocol data unit PDU session in the first cell in the first time period, and the handover success rate of the first cell in the first time period, the determining unit may preferentially select, based on preconfigured priorities of different load prediction information, load prediction information with a higher priority as a determining basis for determining the target cell in the at least one first cell.

In another possible design, when the load prediction information includes two or more of the quantity of terminals accessing the first cell in the first time period, the setup success rate of the protocol data unit PDU session in the first cell in the first time period, and the handover success rate of the first cell in the first time period, the determining unit may calculate a weighted average value or a sum result of different load prediction information based on preconfigured weight values or other weighted indicators of the different load prediction information. Then, the first radio access network device may use the weighted average value or the sum result obtained through calculation as a determining basis for determining the target cell in the at least one first cell.

In a possible design, the load prediction information further includes a confidence level of the load prediction information.

In a possible design, the first network device is any one of a core network device, a second radio access network device, and a network control device.

In a possible design, the communication apparatus may further include: a sending unit, configured to send a load prediction request to the first network device, where the load prediction request includes the first time period.

In a possible design, the load prediction request further includes a cell identifier of the at least one first cell.

In a possible design, the load prediction request further includes a load item, and the load item is used to indicate the load prediction information that the sending unit requests to obtain.

In another possible design, the receiving unit may be specifically configured to receive the load prediction information, of the at least one first cell, that is actively sent by the first network device.

According to a third aspect, an embodiment of this application further provides a communication apparatus. The communication apparatus includes: a processor, configured to execute computer instructions stored in a memory. When the computer instructions are executed, the apparatus is enabled to perform the method according to any one of the first aspect or the possible designs of the first aspect.

According to a fourth aspect, an embodiment of this application further provides a communication apparatus. The communication apparatus includes a processor and an interface circuit. The processor is configured to: communicate with another apparatus through the interface circuit, and perform the method according to any one of the first aspect or the possible designs of the first aspect.

The communication apparatuses according to the second aspect to the fourth aspect may be used in a first radio access network device.

According to a fifth aspect, an embodiment of this application further provides a computer-readable storage medium. The computer-readable storage medium includes computer software instructions. When the computer software instructions are run on a first radio access network device or a chip built in the first radio access network device, the first radio access network device is enabled to perform the method according to the first aspect.

According to a sixth aspect, an embodiment of this application further provides a target cell determining method. The method includes: A first network device sends load prediction information of at least one first cell to a first radio access network device, so that the first radio access network device determines a target cell in the at least one first cell based on the load prediction information of the at least one first cell. The first cell is a cell controlled by another radio access network device; and the load prediction information includes at least one of a quantity of terminals accessing the first cell in a first time period, a setup success rate of a protocol data unit PDU session in the first cell in the first time period, and a handover success rate of the first cell in the first time period.

In the target cell determining method, the load prediction information can reflect at least one of the quantity of terminals accessing the first cell in the first time period, the setup success rate of the PDU session in the first cell in the first time period, and the handover success rate of the first cell in the first time period. Therefore, when the first radio access network device needs to hand over a serving cell for a terminal in the first time period or before the first time period, the first radio access network device determines, in the at least one first cell based on the load prediction information of the at least one first cell from the first network device, a target cell that is to be handed over, to make the determined target cell more appropriate, thereby improving a handover success rate of the terminal, and ensuring quality of service of the terminal.

In a possible design, the load prediction information further includes a confidence level of the load prediction information.

In this design, when determining the target cell in the at least one first cell based on the load prediction information of the at least one first cell, the first radio access network device may further consider the confidence level of the load prediction information. When two or more first cells have same load prediction information, the first radio access network device may further select, based on the confidence level of the load prediction information, a first cell corresponding to load prediction information with a highest confidence level as the target cell, to further ensure the handover success rate of the terminal.

In a possible design, the first network device is any one of a core network device, a second radio access network device, and a network control device.

In a possible design, before that a first network device sends load prediction information of at least one first cell to a first radio access network device, the method further includes: The first network device receives a load prediction request from the first radio access network device, where the load prediction request includes the first time period.

Correspondingly, the first network device may send the load prediction information of the at least one first cell to the first radio access network device based on the load prediction request.

In a possible design, the load prediction request further includes a cell identifier of the at least one first cell.

In this design, the cell identifier is added to the load prediction request, so that the first radio access network device may specifically request, by using the load prediction request, the first network device to obtain load prediction information of several specific cells in cells controlled by another radio access network device. This can prevent the first network device from sending unnecessary load prediction information of a cell to the first radio access network device, to reduce signaling overheads.

In a possible design, the load prediction request further includes a load item, and the load item is used to indicate the load prediction information that the first radio access network device requests to obtain.

In another possible design, that a first network device sends load prediction information of at least one first cell to a first radio access network device may include: The first network device actively sends the load prediction information of the at least one first cell to the first radio access network device.

For example, the first network device may actively send the load prediction information of the at least one first cell to the first radio access network device based on a preset periodicity.

According to a seventh aspect, an embodiment of this application provides a communication apparatus. The apparatus has a function of implementing the method according to the sixth aspect. The function may be implemented by hardware, or may be implemented by executing corresponding software by hardware. The hardware or the software includes one or more units or modules corresponding to the function of the method according to the sixth aspect, for example, a sending unit.

The sending unit may be configured to send load prediction information of at least one first cell to a first radio access network device, so that the first radio access network device determines a target cell in the at least one first cell based on the load prediction information of the at least one first cell. The first cell is a cell controlled by another radio access network device; and the load prediction information includes at least one of a quantity of terminals accessing the first cell in a first time period, a setup success rate of a protocol data unit PDU session in the first cell in the first time period, and a handover success rate of the first cell in the first time period.

In a possible design, the apparatus further includes: a receiving unit, configured to receive a load prediction request from the first radio access network device, where the load prediction request includes the first time period.

In a possible design, the load prediction request further includes a cell identifier of the at least one first cell.

In a possible design, the load prediction request further includes a load item, and the load item is used to indicate the load prediction information that the first radio access network device requests to obtain.

In a possible design, the sending unit may be specifically configured to actively send the load prediction information of the at least one first cell to the first radio access network device.

According to an eighth aspect, an embodiment of this application further provides a communication apparatus. The communication apparatus includes: a processor, configured to execute computer instructions stored in a memory. When the computer instructions are executed, the apparatus is enabled to perform the method according to any one of the sixth aspect or the possible designs of the sixth aspect.

According to a ninth aspect, an embodiment of this application further provides a communication apparatus. The communication apparatus includes a processor and an interface circuit. The processor is configured to: communicate with another apparatus through the interface circuit, and perform the method according to any one of the sixth aspect or the possible designs of the sixth aspect.

The communication apparatuses according to the seventh aspect to the ninth aspect may be used in a first network device.

According to a tenth aspect, an embodiment of this application further provides a computer-readable storage medium. The computer-readable storage medium includes computer software instructions. When the computer software instructions are run on a first network device or a chip built in the first network device, the first network device is enabled to perform the method according to the sixth aspect.

It may be understood that, for beneficial effects that can be achieved in the second aspect to the tenth aspect, refer to beneficial effects in any one of the first aspect and the possible designs of the first aspect. Details are not described herein again.

According to an eleventh aspect, an embodiment of this application further provides a target cell determining method. The method includes: A first radio access network device receives a cell identifier of at least one first cell from a second network device. The first radio access network device determines a target cell based on the cell identifier of the at least one first cell.

The second network device may be a core network device or a network control device.

In this design, the cell identifier, of the at least one first cell, that is received by the first radio access network device may be determined by the second network device by obtaining a predicted movement track of a terminal based on historical information of the terminal, and determining based on the predicted movement track of the terminal. When the first radio access network device hands over the terminal to the target cell determined based on the cell identifier of the at least one first cell, a handover success rate of the terminal is higher, so that quality of service of the terminal can be ensured.

According to a twelfth aspect, an embodiment of this application provides a communication apparatus. The apparatus has a function of implementing the method according to the eleventh aspect. The function may be implemented by hardware, or may be implemented by executing corresponding software by hardware. The hardware or the software includes one or more units or modules corresponding to the function of the method according to the eleventh aspect, for example, a receiving unit and a determining unit.

The receiving unit may be configured to receive a cell identifier of at least one first cell from a second network device. The determining unit may be configured to determine a target cell based on the cell identifier of the at least one first cell.

According to a thirteenth aspect, an embodiment of this application further provides a communication apparatus. The communication apparatus includes: a processor, configured to execute computer instructions stored in a memory. When the computer instructions are executed, the apparatus is enabled to perform the method according to the eleventh aspect.

According to a fourteenth aspect, an embodiment of this application further provides a communication apparatus. The communication apparatus includes: a processor and an interface circuit. The processor is configured to: communicate with another apparatus through the interface circuit, and perform the method according to the eleventh aspect.

The communication apparatuses according to the twelfth aspect to the fourteenth aspect may be used in a first radio access network device.

According to a fifteenth aspect, an embodiment of this application further provides a computer-readable storage medium. The computer-readable storage medium includes computer software instructions. When the computer software instructions are run on a first radio access network device or a chip built in the first radio access network device, the first radio access network device is enabled to perform the method according to the eleventh aspect.

According to a sixteenth aspect, an embodiment of this application further provides a target cell determining method. The method includes: A second network device sends a cell identifier of at least one first cell to a first radio access network device, so that the first radio access network device determines a target cell based on the cell identifier of the at least one first cell.

The second network device may be a core network device or a network control device.

In a possible design, before that a second network device sends a cell identifier of at least one first cell to a first radio access network device, the method further includes: The second network device obtains historical information of a terminal. The second network device determines the cell identifier of the at least one first cell based on the historical information.

In a possible design, that the second network device determines the cell identifier of the at least one first cell based on the historical information includes: The second network device generates a predicted movement track of the terminal based on the historical information. The second network device determines the cell identifier of the at least one first cell based on the predicted movement track.

In this design, the cell identifier, of the at least one first cell, that is sent by the second network device to the first radio access network device is determined by the second network device by obtaining the predicted movement track of the terminal based on the historical information of the terminal, and determining based on the predicted movement track of the terminal. When the first radio access network device hands over the terminal to the target cell determined based on the cell identifier of the at least one first cell, a handover success rate of the terminal is higher, so that quality of service of the terminal can be ensured.

According to a seventeenth aspect, an embodiment of this application provides a communication apparatus. The apparatus has a function of implementing the method according to the sixteenth aspect. The function may be implemented by hardware, or may be implemented by executing corresponding software by hardware. The hardware or the software includes one or more units or modules corresponding to the function of the method according to the sixteenth aspect, for example, a sending unit.

The sending unit may be configured to send a cell identifier of at least one first cell to a first radio access network device, so that the first radio access network device determines a target cell based on the cell identifier of the at least one first cell.

In a possible design, the apparatus further includes: an obtaining unit, configured to obtain historical information of a terminal; and a determining unit, configured to determine the cell identifier of the at least one first cell based on the historical information.

In a possible design, the determining unit may be specifically configured to: generate a predicted movement track of the terminal based on the historical information, and determine the cell identifier of the at least one first cell based on the predicted movement track.

According to an eighteenth aspect, an embodiment of this application further provides a communication apparatus. The communication apparatus includes: a processor, configured to execute computer instructions stored in a memory. When the computer instructions are executed, the apparatus is enabled to perform the method according to the sixteenth aspect.

According to a nineteenth aspect, an embodiment of this application further provides a communication apparatus. The communication apparatus includes: a processor and an interface circuit. The processor is configured to: communicate with another apparatus through the interface circuit, and perform the method according to the sixteenth aspect.

The communication apparatuses according to the seventeenth aspect to the nineteenth aspect may be used in a second network device.

According to a twentieth aspect, an embodiment of this application further provides a computer-readable storage medium. The computer-readable storage medium includes computer software instructions. When the computer software instructions are run on a second network device or a chip built in the second network device, the second network device is enabled to perform the method according to the sixteenth aspect.

It may be understood that, for beneficial effects that can be achieved in the twelfth aspect to the twentieth aspect, refer to beneficial effects in any one of the eleventh aspect and the possible designs of the eleventh aspect. Details are not described herein again.

According to a twenty-first aspect, an embodiment of this application further provides a target cell determining method. The method includes: A first radio access network device receives historical information of a terminal from a second network device. The first radio access network device determines a cell identifier of at least one first cell based on the historical information. The first radio access network device determines a target cell based on the cell identifier of the at least one first cell.

The second network device may be a core network device or a network control device.

In a possible design, that the first radio access network device determines a cell identifier of at least one first cell based on the historical information includes: The first radio access network device generates a predicted movement track of the terminal based on the historical information. The first radio access network device determines the cell identifier of the at least one first cell based on the predicted movement track.

According to a twenty-second aspect, an embodiment of this application provides a communication apparatus. The apparatus has a function of implementing the method according to the twenty-first aspect. The function may be implemented by hardware, or may be implemented by executing corresponding software by hardware. The hardware or the software includes one or more units or modules corresponding to the function of the method according to the twenty-first aspect, for example, a receiving unit and a determining unit.

The receiving unit may be configured to receive historical information of a terminal from a second network device. The determining unit may be configured to determine a cell identifier of at least one first cell based on the historical information, where the first cell is a cell controlled by another radio access network device. The determining unit is further configured to determine a target cell based on the cell identifier of the at least one first cell.

In a possible design, the determining unit may be specifically configured to: generate a predicted movement track of the terminal based on the historical information, and determine the cell identifier of the at least one first cell based on the predicted movement track.

According to a twenty-third aspect, an embodiment of this application further provides a communication apparatus. The communication apparatus includes: a processor, configured to execute computer instructions stored in a memory. When the computer instructions are executed, the apparatus is enabled to perform the method according to the twenty-first aspect.

According to a twenty-fourth aspect, an embodiment of this application further provides a communication apparatus. The communication apparatus includes: a processor and an interface circuit. The processor is configured to: communicate with another apparatus through the interface circuit, and perform the method according to the twenty-first aspect.

The communication apparatuses according to the twenty-second aspect to the twenty-fourth aspect may be used in a first radio access network device.

According to a twenty-fifth aspect, an embodiment of this application further provides a computer-readable storage medium. The computer-readable storage medium includes computer software instructions. When the computer software instructions are run on a first radio access network device or a chip built in the first radio access network device, the first radio access network device is enabled to perform the method according to the twenty-first aspect.

It may be understood that, for beneficial effects that can be achieved in the twenty-second aspect to the twenty-fifth aspect, refer to beneficial effects in any one of the twenty-first aspect and the possible designs of the twenty-first aspect. Details are not described herein again.

According to a twenty-sixth aspect, an embodiment of this application further provides a communication apparatus. The communication apparatus includes: a transceiver unit and a processing unit. The transceiver unit may be configured to send and receive information, or configured to communicate with another network element. The processing unit may be configured to process data. For example, the apparatus may implement the method according to any one of the first aspect, the sixth aspect, the eleventh aspect, the sixteenth aspect, and the twenty-first aspect through the transceiver unit and the processing unit.

According to a twenty-seventh aspect, an embodiment of this application further provides a computer program product. When the computer program product is executed, the method according to any one of the first aspect, the sixth aspect, the eleventh aspect, the sixteenth aspect, and the twenty-first aspect may be implemented.

According to a twenty-eighth aspect, an embodiment of this application further provides a chip system. The chip system is applied to a first radio access network device. The chip system includes one or more interface circuits and one or more processors. The interface circuit and the processor are interconnected through a line. The processor receives computer instructions from a memory of an electronic device through the interface circuit and executes the computer instructions, to implement the method according to any one of the first aspect, the eleventh aspect, and the twenty-first aspect.

According to a twenty-ninth aspect, an embodiment of this application further provides a chip system. The chip system is applied to a first network device. The chip system includes one or more interface circuits and one or more processors. The interface circuit and the processor are interconnected through a line. The processor receives computer instructions from a memory of an electronic device through the interface circuit and executes the computer instructions, to implement the method according to the sixth aspect.

According to a thirtieth aspect, an embodiment of this application further provides a chip system. The chip system is applied to a second network device. The chip system includes one or more interface circuits and one or more processors. The interface circuit and the processor are interconnected through a line. The processor receives computer instructions from a memory of an electronic device through the interface circuit and executes the computer instructions, to implement the method according to the sixteenth aspect.

It may be understood that, for beneficial effects that can be achieved in the twenty-sixth aspect to the thirtieth aspect, refer to beneficial effects in the first aspect, the sixth aspect, the eleventh aspect, the sixteenth aspect, the twenty-first aspect, and the like. Details are not described herein again.

### BRIEF DESCRIPTION OF DRAWINGS

FIG. 1 is a schematic composition diagram of a communication system according to an embodiment of this application;
FIG. 2 is a schematic composition diagram of a network device according to an embodiment of this application;
FIG. 3 is a schematic flowchart of a target cell determining method according to an embodiment of this application;
FIG. 4 is a schematic diagram of a communication architecture between a radio access network device and a core network device according to an embodiment of this application;
FIG. 5 is a schematic diagram of a communication architecture between different radio access network devices according to an embodiment of this application;
FIG. 6 is another schematic flowchart of a target cell determining method according to an embodiment of this application;
FIG. 7 is still another schematic flowchart of a target cell determining method according to an embodiment of this application;
FIG. 8 is still another schematic flowchart of a target cell determining method according to an embodiment of this application;
FIG. 9 is a schematic diagram of a structure of a communication apparatus according to an embodiment of this application;
FIG. 10 is a schematic diagram of another structure of a communication apparatus according to an embodiment of this application;
FIG. 11 is a schematic diagram of still another structure of a communication apparatus according to an embodiment of this application;
FIG. 12 is a schematic diagram of still another structure of a communication apparatus according to an embodiment of this application;
FIG. 13 is a schematic diagram of still another structure of a communication apparatus according to an embodiment of this application;
FIG. 14 is a schematic diagram of still another structure of a communication apparatus according to an embodiment of this application; and
FIG. 15 is a schematic diagram of still another structure of a communication apparatus according to an embodiment of this application.

### DESCRIPTION OF EMBODIMENTS

In a mobile communication system, a serving cell of UE in an RRC connected state may be changed, to provide a continuous and uninterrupted communication service for the UE. For example, in a movement process of the UE, quality of a signal received by the UE from the serving cell gradually becomes worse, and quality of a signal received by the UE from a target cell to which the UE gradually approaches gradually becomes better. When the quality of the signal received by the UE from the target cell is higher than the quality of the signal from the serving cell by a threshold, the UE may be handed over to the target cell. Alternatively, the UE may be handed over from a current serving cell to another cell in consideration of load balancing between different cells. For example, when load of the serving cell that the UE currently accesses is excessively high, the UE may alternatively be handed over to another target cell with low load.

Herein, a base station corresponding to the serving cell that the UE currently accesses may be referred to as a source base station. When handing over the UE, the source base station needs to first determine a target cell, and select an appropriate target cell for the UE; and then hands over the UE to the target cell. Load of the target cell selected by the source base station affects quality of service of the UE. For example, when the load of the target cell is high, if the UE is handed over to the target cell, the UE may not be capable of accessing the target cell, and consequently a communication service of the UE is interrupted.

In the conventional technology, considering impact of load of a target cell on quality of service of UE, an adopted decision policy of the target cell is usually as follows: Neighboring base stations may exchange load information of respective corresponding cells. When handing over a terminal, a source base station may select, based on load information of other neighboring cells corresponding to the neighboring base stations, an appropriate target cell for the UE from the other neighboring cells corresponding to the neighboring base stations. For example, a current neighboring cell with low load may be selected as the target cell.

The load information may include a radio resource status (radio resource status), a transport layer capacity indicator (transport layer capacity indicator), a composite available capacity group (composite available capacity group), a slice available capacity (slice available capacity), a quantity of active UEs (quantity of active UEs), an RRC connection (RRC connection), and the like. The radio resource status may be an uplink/downlink traffic physical resource block (physical resource block, PRB) utilization rate. The transport layer capacity indicator may be an available capacity provided by a transport network. The composite available capacity group may be an overall available uplink/downlink resource level. For example, 0 indicates that there is no available resource, and 100 indicates a maximum available resource. The slice available capacity may be a ratio of an available resource of each network slice in each cell to a total quantity of resources in the cell. The quantity of active UEs may be an average quantity of users or a maximum quantity of users that are using an application to send and receive data in an uplink, a downlink, or both an uplink and a downlink. The RRC connection may be a quantity of RRC connections and an available RRC connection capacity value. The available RRC connection capacity value is used to indicate a remaining percentage of the quantity of RRC connections relative to a maximum quantity of RRC connections supported in a cell. For example, 0 indicates that there is no available capacity, and 100 indicates a maximum available capacity.

However, in a manner in which the source base station selects, according to the existing decision policy of the target cell and based on the load information of the other neighboring cells corresponding to the neighboring base stations, the target cell for the UE from the other neighboring cells corresponding to the neighboring base stations, and hands over the UE to the target cell, a moment at which the load information of the cells is exchanged between the base stations is earlier than a moment at which the UE is handed over by the source base station. As a result, the load information of the neighboring cells cannot reflect actual load statuses of the neighboring cells when the UE is handed over, and the target cell selected by the source base station may be inappropriate. For example, the UE may be unsuccessfully handed over to the target cell because actual load of the target cell has reached an upper limit at a moment at which the UE is handed over In view of this, the existing manner of determining the target cell based on the load information exchanged between the neighboring base stations is inaccurate, and a handover success rate of the terminal is low.

Based on this, embodiments of this application provide a target cell determining method. In the method, a first network device may obtain load prediction information of at least one first cell in a first time period, and send the load prediction information to a first radio access network device, where the first cell is a cell controlled by another radio access network device. The first radio access network device may receive the load prediction information of the at least one first cell from the first network device, and determine a target cell in the at least one first cell based on the load prediction information of the at least one first cell.

The load prediction information may include at least one of a quantity of terminals accessing the first cell in the first time period, a setup success rate of a protocol data unit (protocol data unit, PDU) session in the first cell in the first time period, and a handover success rate of the first cell in the first time period.

According to the target cell determining method provided in embodiments of this application, the load prediction information can reflect at least one of the quantity of terminals accessing the first cell in the first time period, the setup success rate of the PDU session in the first cell in the first time period, and the handover success rate of the first cell in the first time period. Therefore, when determining the target cell in the at least one first cell based on the load prediction information of the at least one first cell from the first network device, the first radio access network device can select a more appropriate target cell based on the load prediction information. In this way, when the first radio access network device hands over a terminal to the target cell, a handover success rate may be higher, thereby ensuring quality of service of the terminal.

Optionally, the first radio access network device may hand over the terminal in the first time period, or the first radio access network device may hand over the terminal before the first time period. This is not limited in this application.

With reference to the accompanying drawings, the following describes an example of a target cell determining method provided in embodiments of this application.

It should be noted that, in descriptions of this application, words such as "first" and "second" are merely used for distinguishing and description, and are not used to specially limit a feature. In the descriptions of embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects. In this application, "at least one" means one or more, and "a plurality of" means two or more.

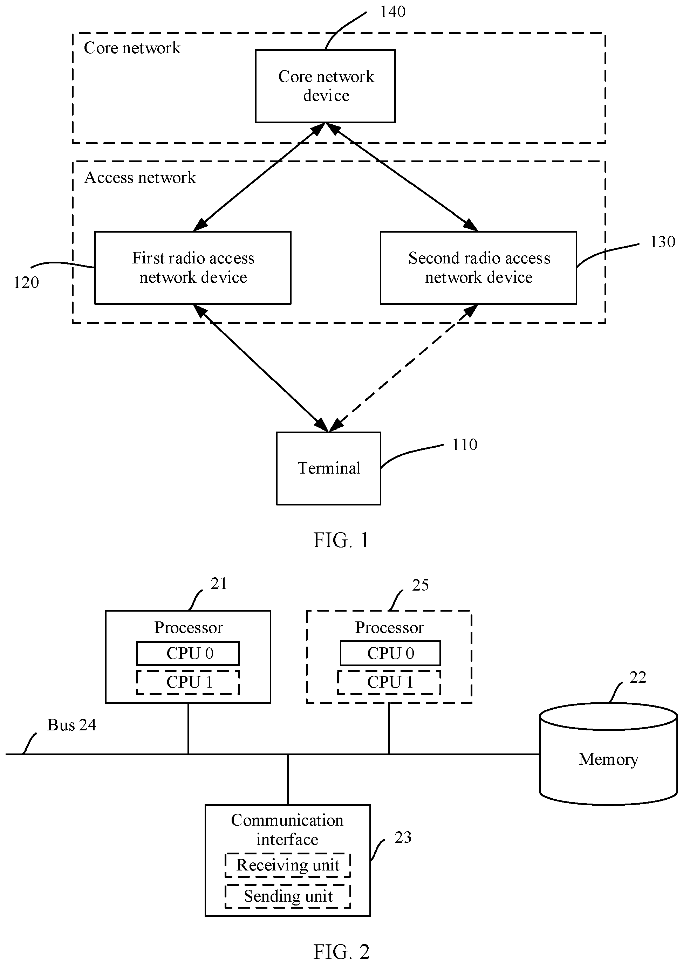

FIG. 1 is a schematic composition diagram of a communication system according to an embodiment of this application.

As shown in FIG. 1, the communication system in this embodiment of this application may include a terminal 110, a first radio access network (radio access network, RAN) device 120, a second radio access network device 130, and a core network device 140.

The first radio access network device 120 and the second radio access network device 130 may also be referred to as next generation radio access network devices. The terminal 110 may communicate with the core network device 140 through the first radio access network device 120 or the second radio access network device 130. The first radio access network device 120 or the second radio access network device 130 may provide function services such as radio resource management, quality of service management, and data encryption and compression for the terminal 110.

The first radio access network device 120 and/or the second radio access network device 130 may communicate with the core network device 140 through a next generation (next generation, NG) interface, and different radio access network devices (including the first radio access network device 120 and the second radio access network device 130) may communicate with each other through an Xn interface.

Optionally, the communication system may be a wideband code division multiple access (wideband code division multiple access, WCDMA) system, a long term evolution (long term evolution, LTE) system, an LTE frequency division duplex (frequency division duplex, FDD) system, a universal mobile telecommunications system (universal mobile telecommunications system, UMTS), a 5th generation (5th generation, 5G) mobile communication technology communication system, another wireless communication system that uses an orthogonal frequency division multiplexing (orthogonal frequency division multiplexing, OFDM) technology, and the like. A specific type of the communication system is not limited in this application.

Optionally, the terminal 110 in the communication system may also be referred to as UE, and may be a mobile phone (a "cellular" phone), a cell phone, a computer, a cordless phone, a session initiation protocol (session initiation protocol, SIP) phone, a wireless local loop (wireless local loop, WLL) station, a personal digital assistant (personal digital assistant, PDA), a laptop computer, a handheld communication device, a handheld computing device, a satellite wireless device, a wireless modem card, a television set-top box (set-top box, STB), a customer premises equipment (customer premises equipment, CPE), a wearable device (for example, a smartwatch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), another device used for communication in a wireless system, and the like. A specific representation form of the terminal 110 is not limited in this application either.

In some embodiments, the first radio access network device 120 and/or the second radio access network device 130 may be a next generation NodeB (next generation NodeB, gNB), a next generation evolved NodeB (next generation evolved NodeB, ng-eNB), a central unit (central unit, CU), a distributed unit (distributed unit, DU), a central unit-control plane (central unit-control plane, CU-CP), a central unit-user plane (central unit-user plane, CU-UP), or the like.

The gNB may provide a new radio (new radio, NR) control plane and/or user plane protocol and function for the terminal 110, and access a 5G core network (5th generation core, 5GC). The ng-eNB may provide an evolved universal terrestrial radio access (evolved universal terrestrial radio access, E-UTRA) control plane and/or user plane protocol and function for the terminal 110, and access the 5GC. The CU mainly includes an RRC layer, a service data adaptation protocol (service data adaptation protocol, SDAP) layer, and a packet data convergence protocol (packet data convergence protocol, PDCP) layer of the gNB, or an RRC layer and a PDCP layer of the ng-eNB. The DU mainly includes a radio link control (radio link control, RLC) layer, a media access control (media access control, MAC) layer, and a physical layer of the gNB or the ng-eNB. The CU-CP mainly includes an RRC layer in a gNB-CU or an ng-eNB-CU and a control plane at the PDCP layer. The CU-UP mainly includes an SDAP layer in the gNB-CU or the ng-eNB-CU and a user plane at the PDCP layer.

In some embodiments, the core network device 140 may include a session management function (session management function, SMF), an access and mobility management function (access and mobility management function, AMF), a network data analysis function (network data analytics function, NWDAF), a user plane function (user plane function, UPF), and the like.

The SMF is mainly responsible for session management (for example, session setup, session modification, and session release), UE IP address allocation and management, user plane function selection and control, termination of a session management part in a non-access stratum (non-access stratum, NAS) message, and the like. The AMF is mainly responsible for functions such as access control, mobility management, attachment and detachment, and gateway selection. The NWDAF is mainly responsible for functions such as data collection and analysis. The UPF is mainly responsible for functions such as packet routing and forwarding.

It should be noted that the SMF, the AMF, the NWDAF, the UPF, and the like are merely examples for describing the core network device 140, and this is not limited in this application.

It may be understood that the communication system shown in FIG. 1 is merely intended to describe the technical solutions in embodiments of this application more clearly, and does not constitute a limitation on the technical solutions provided in embodiments of this application. For example, the communication system may further include another device, for example, a network control device. The network control device may be an operation, administration, and maintenance (operation, administration, and maintenance, OAM) system, which is also referred to as a network management system. The network control device may manage the first radio access network device 120, the second radio access network device 130, and the core network device 140.

In addition, a person of ordinary skill in the art may learn that the technical solutions provided in embodiments of this application are also applicable to a similar technical problem as a network architecture evolves and a new service scenario emerges.

FIG. 2 is a schematic composition diagram of a network device according to an embodiment of this application. The network device may be any one of the first radio access network device 120, the second radio access network device 130, and the core network device 140 in the communication system shown in FIG. 1, or may be the foregoing network control device. As shown in FIG. 2, the network device may include at least one processor 21, a memory 22, a communication interface 23, and a bus 24.

The following describes the components of the network device in detail with reference to FIG. 2.

The processor 21 is a control center of the network device, and may be one processor or may be a general term of a plurality of processing elements. For example, the processor 21 may be a central processing unit (central processing unit, CPU), or may be an application-specific integrated circuit (application-specific integrated circuit, ASIC), or may be configured as one or more integrated circuits implementing embodiments of this application, for example, one or more microprocessors (digital signal processors, DSPs), or one or more field programmable gate arrays (field programmable gate arrays, FPGAs).

The processor 21 may run or execute a software program stored in the memory 22, and invoke data stored in the memory 22, to perform various functions of the network device. For example, when the network device is the first radio access network device 120, the network device may perform the steps performed by the first radio access network device 120 in the target cell determining method provided in embodiments of this application.

During specific implementation, in an embodiment, the processor 21 may include one or more CPUs, for example, a CPU 0 and a CPU 1 shown in FIG. 2.

During specific implementation, in an embodiment, the network device may include a plurality of processors, for example, the processor 21 and a processor 25 shown in FIG. 2. Each of the processors may be a single-core processor (single-CPU) or may be a multi-core processor (multi-CPU). The processor herein may be one or more devices, circuits, and/or processing cores configured to process data (for example, computer program instructions).

The memory 22 is configured to store a software program for performing the method steps performed by the network device in the solutions of this application, and the processor 21 controls the execution. The memory 22 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. However, the memory 22 is not limited thereto.

The memory 22 may exist independently and be connected to the processor 21 through the bus 24. Alternatively, the memory 22 may be integrated with the processor 21. This is not limited herein.

The communication interface 23 is configured to communicate with another device or a communication network through any transceiver-type apparatus. For example, when the network device is the first radio access network device 120, the network device may communicate with the core network device 140. The communication interface 23 may be an Ethernet interface, a radio access network (radio access network, RAN) interface, a wireless local area network (wireless local area network, WLAN) interface, or the like. The communication interface 23 may include a receiving unit for implementing a receiving function and a sending unit for implementing a sending function.

The bus 24 may be an industry standard architecture (industry standard architecture, ISA) bus, a peripheral component interconnect (peripheral component, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus.

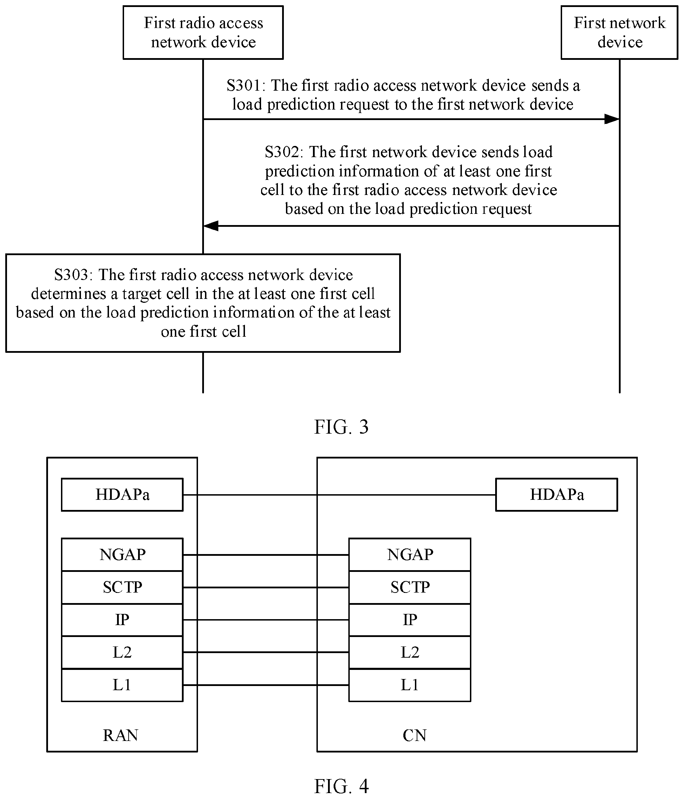

FIG. 3 is a schematic flowchart of a target cell determining method according to an embodiment of this application. As shown in FIG. 3, the target cell determining method may include S301 to S303.

S301: A first radio access network device sends a load prediction request to a first network device.

In a possible design, the load prediction request may be used only as a trigger request. For example, the load prediction request may include a trigger indication. When receiving the load prediction request, the first network device may trigger the first network device to send load prediction information of at least one first cell to the first radio access network device. The first cell is a cell controlled by another radio access network device (for example, the second radio access network device shown in FIG. 1).

In another possible design, the load prediction request may further include a cell identifier of the at least one first cell.

The cell identifier included in the load prediction request may be a new radio cell global identifier (NR cell global identifier, NR CGI), and may be used to uniquely identify a new radio cell globally. Alternatively, the cell identifier may be a physical cell identifier (physical cell identifier, PCI).

In this design, the cell identifier is added to the load prediction request, so that the first radio access network device may specifically request, by using the load prediction request, the first network device to obtain load prediction information of several specific cells in cells controlled by another radio access network device. This can prevent the first network device from sending unnecessary load prediction information of a cell to the first radio access network device, to reduce signaling overheads.

For example, the cells controlled by the another radio access network device include a cell 1, a cell 2, a cell 3, and a cell 4. In this case, the first radio access network device may request, from the first network device by using the load prediction request that includes the cell identifier, load prediction information of any one or more of the cell 1, the cell 2, the cell 3, and the cell 4, instead of sending, by the first network device, the load prediction information of the cell 1, the cell 2, the cell 3, and the cell 4 to the first radio access network device. Therefore, signaling overheads are effectively reduced.

In some embodiments, the first network device may be a core network device or a second radio access network device. For a specific type of the core network device or the second radio access network device, refer to related descriptions in the communication system shown in FIG. 1.

When the first network device is the core network device, the first radio access network device may send the load prediction request to the core network device by using a control plane message, for example, an NG setup request (NG setup request) message or a RAN configuration update (RAN configuration update) message. The control plane message may be transmitted by using a control plane protocol of an NG interface, for example, transmitted by using a next generation application protocol (next generation application protocol, NGAP).

Alternatively, the first radio access network device may send the load prediction request to the core network device by using a PDU session user plane protocol, for example, uplink PDU session information (uplink PDU session information). The PDU session user plane protocol is a user plane protocol of an NG interface, and is used to provide non-guaranteed distribution for a PDU session user plane PDU between an access network device and a UPF.

Alternatively, the first radio access network device may send the load prediction request to the core network device by using a high data analytics protocol annex (high data analytics protocol annex, HDAPa). For example, FIG. 4 is a schematic diagram of a communication architecture between a radio access network device and a core network device according to an embodiment of this application. In FIG. 4, L1 represents a physical layer, L2 represents a data link layer, the internet protocol (internet protocol, IP) represents a network layer, the stream control transmission protocol (stream control transmission protocol, SCTP) represents a transport layer, and NGAP and HDAPa represent application layers. Data transmission may be performed between the radio access network device and the core network device based on the HDAPa protocol. For example, the HDAPa protocol may support functions such as data segmentation, data sorting, and data security (for example, data integrity protection, data encryption, and data decryption) between the radio access network device and the core network device. HDAPa may use a service provided by NGAP. In other words, an HDAPa message may be carried in an NGAP message.

When the first network device is the second radio access network device, the first radio access network device may send the load prediction request to the second radio access network device by using a control plane message, for example, a retrieve UE context request (retrieve UE context request) message or an Xn setup request (Xn setup request) message. The control plane message may be transmitted by using a control plane protocol of an Xn interface, for example, transmitted by using an Xn application protocol (Xn application protocol, XNAP).

Alternatively, the first radio access network device may send the load prediction request to the second radio access network device by using a new radio user plane protocol, for example, downlink user data (downlink user data). The new radio user plane protocol is a user plane protocol of an Xn interface, and is used to provide non-guaranteed distribution for a user plane PDU between radio access network devices.

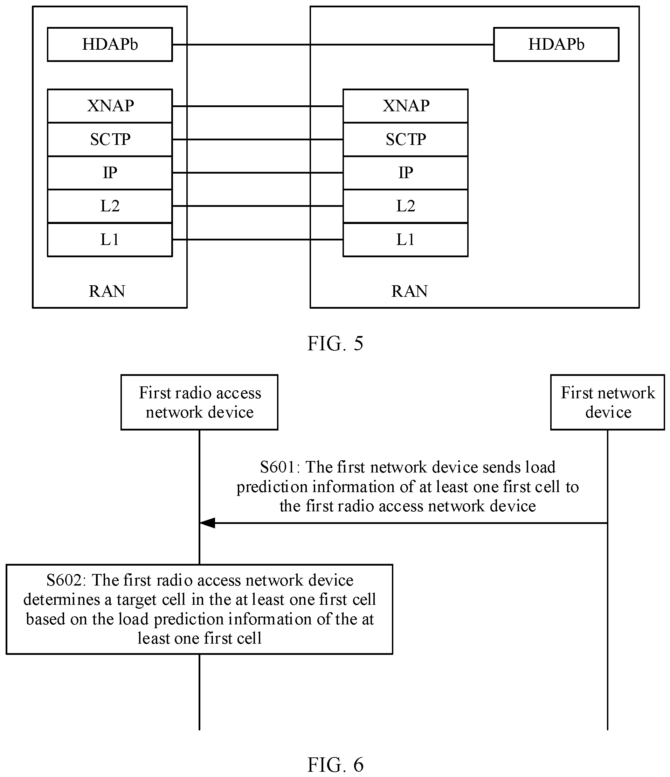

Alternatively, the first radio access network device may send the load prediction request to the second radio access network device by using a high data analytics protocol type b (high data analytics protocol type b, HDAPb). For example, FIG. 5 is a schematic diagram of a communication architecture between different radio access network devices according to an embodiment of this application. In FIG. 5, L1 represents a physical layer, L2 represents a data link layer, the internet protocol (internet protocol, IP) represents a network layer, the stream control transmission protocol (stream control transmission protocol, SCTP) represents a transport layer, and XNAP and HDAPb represent application layers. Data transmission may be performed between the first radio access network device and the second radio access network device based on the HDAPb protocol. For example, the HDAPb protocol may support functions such as data segmentation, data sorting, and data security (for example, data integrity protection, data encryption, and data decryption) between the first radio access network device and the second radio access network device. HDAPb may use a service provided by XNAP. In other words, an HDAPb message may be carried in an XNAP message.

In some other embodiments, the first network device may alternatively be the foregoing network control device. Data transmission may alternatively be performed between the network control device and the first radio access network device. Details are not described herein again.

Correspondingly, the first network device may receive the load prediction request from the first radio access network device, where the load prediction request includes a first time period. The first network device may predict and obtain, based on the received load prediction request, load prediction information of a cell controlled by another radio access network device in the first time period, and return the load prediction information to the first radio access network device. For example, S302 may be performed.

S302: The first network device sends the load prediction information of the at least one first cell to the first radio access network device based on the load prediction request.

Correspondingly, the first radio access network device receives the load prediction information of the at least one first cell from the first network device.

The load prediction information may include at least one of a quantity of terminals accessing the first cell in the first time period, a setup success rate of a PDU session in the first cell in the first time period, and a handover success rate of the first cell in the first time period.

The quantity of terminals accessing the first cell in the first time period is a total quantity, of terminals in the first cell in the first time period, that is predicted by the first network device, and may include a quantity of terminals in an RRC connected (RRC connected) state and a quantity of terminals in an RRC inactive (RRC inactive) state. The setup success rate of the PDU session in the first cell in the first time period is a probability that the PDU session is successfully set up in the first cell in the first time period and that is predicted by the first network device. The handover success rate of the first cell in the first time period is a total handover success rate that is of handing over a terminal from another cell to the first cell in the first time period and that is predicted by the first network device.

Optionally, the step in which the first network device predicts the load prediction information of the first cell may be performed after the load prediction request is received, or may be performed before the load prediction request is received. This is not limited herein. In addition, the first time period may be determined by the first network device, or may be indicated by the first radio access network device to the first network device by using the load prediction request. This is not limited herein either.

For example, the first network device may actively predict the setup success rate of the PDU session in the first cell in the first time period, the handover success rate of the first cell in the first time period, and the like. Alternatively, the load prediction request sent by the first radio access network device to the first network device may further include time indication information. For example, the time indication information may be specific time corresponding to the first time period. The time indication information may indicate the first network device to predict the setup success rate of the PDU session in the first cell in the first time period, the handover success rate of the first cell in the first time period, and the like.

The following describes a process in which the first network device predicts the load prediction information by using an example in which the load prediction information is the setup success rate of the PDU session in the first cell in the first time period.

Optionally, the first network device may be preconfigured with a trained neural network model, and the first network device may determine, by using the neural network model, load prediction information corresponding to each cell. For example, a neural network used to train the neural network model may be an Alex network (AlexNet). The first network device may obtain, from an SMF, historical data of successfully setting up the PDU session in the first cell, and input the historical data into the neural network model. The neural network model may output the setup success rate of the PDU session in the first cell in the first time period as the load prediction information corresponding to the first cell.

Similarly, the first network device may also input historical data of the quantity of terminals accessing the first cell or historical data of the handover success rate of the first cell into the foregoing neural network model, to obtain the quantity of terminals accessing the first cell in the first time period or the handover success rate of the first cell in the first time period as the load prediction information corresponding to the first cell. Details are not described herein again.

Certainly, it may be understood that load prediction information corresponding to each first cell further includes a cell identifier of the first cell. For example, the cell identifier may be the same as the cell identifier included in the load prediction request, and may be an NR CGI or a PCI. When the first network device is the core network device, the core network device may send the load prediction information to the first radio access network device in the following manner: (1) The core network device may send the load prediction information by using a control plane message, for example, an NG setup response (NG setup response) message or an AMF configuration update (AMF configuration update) message. The control plane message may be transmitted by using a control plane protocol of an NG interface, for example, transmitted by using NGAP. (2) The core network device may send the load prediction information to the first radio access network device by using a PDU session user plane protocol, for example, downlink PDU session information (downlink PDU session information). (3) Refer to FIG. 4. The core network device may send the load prediction information to the first radio access network device by using an HDAPa protocol.

When the first network device is the second radio access network device, the second radio access network device may send the load prediction information to the first radio access network device in the following manner: (1) The second radio access network device may send the load prediction information by using a control plane message, for example, an Xn setup request (Xn setup request) message or an NG-RAN node configuration update (NG-RAN node configuration update) message. The control plane message may be transmitted by using a control plane protocol of an Xn interface, for example, transmitted by using XNAP. (2) The second radio access network device may send the load prediction information by using a new radio user plane protocol, for example, assistance information data (Assistance Information Data). (3) Refer to FIG. 5. The second radio access network device may send the load prediction information to the first radio access network device by using an HDAPb protocol.

Similarly, when the first network device is the network control device, the network control device may also send the load prediction information to the first radio access network device. Details are not described again.

S303: The first radio access network device determines a target cell in the at least one first cell based on the load prediction information of the at least one first cell.

For example, it is assumed that the first radio access network device receives load prediction information of two first cells, and the two first cells are respectively a cell 1 and a cell 2. In this case, the first radio access network device may determine the target cell in the cell 1 and the cell 2 based on the respective load prediction information of the cell 1 and the cell 2. For example, if the load prediction information corresponding to the cell 1 and the load prediction information corresponding to the cell 2 are both handover success rates, the first radio access network device may select a cell with a higher handover success rate in the cell 1 and the cell 2 as the target cell.

Alternatively, in some embodiments, the target cell may be determined in the at least one first cell with reference to a location of the terminal and based on the load prediction information of the at least one first cell. The location of the terminal may be a current physical location of the terminal, for example, global positioning system

(global positioning system, GPS) coordinates, or the location of the terminal may be represented by one or more of a reference signal received power (reference signal received power, RSRP), reference signal received quality (reference signal received quality, RSRQ), and a signal to interference plus noise ratio (signal to interference plus noise ratio, SINR), of different first cells, reported by the terminal.

For example, the location of the terminal is represented by using the RSRP. Assuming that the load prediction information is the handover success rate, the first radio access network device may first select, based on handover success rates of different first cells, a plurality of candidate first cells whose handover success rates meet a condition (for example, the handover success rates are all higher than a threshold); and then may select, from the plurality of candidate first cells, a first cell with a highest RSRP as the target cell. Alternatively, the first radio access network device may first select, based on RSRPs of different first cells, a plurality of candidate first cells whose RSRPs are all higher than a threshold; and then may select, from the plurality of candidate first cells, a first cell with a highest handover success rate as the target cell.

It should be noted that the foregoing manner of determining the target cell with reference to the RSRP and the load prediction information is merely an example for description. In another embodiment of this application, the load prediction information may be combined with one or more of the RSRQ, the SINR, the physical location of the terminal, or the like, to jointly determine the target cell. This is not limited herein.

The following separately describes beneficial effects of three types of load prediction information: the quantity of terminals accessing the first cell in the first time period, the setup success rate of the PDU session in the first cell in the first time period, and the handover success rate of the first cell in the first time period when the first radio access network device determines the target cell in the at least one first cell based on the load prediction information of the at least one first cell.
(1) In a process of handing over a serving cell of a terminal to the target cell, when other terminals in an inactive state also initiate network access and set up a PDU session, these terminals contend with the terminal to be handed over for network resources. This affects a handover success rate or quality of service of the terminal to be handed over in the target cell. However, in this embodiment of this application, when the load prediction information includes the quantity of terminals accessing the first cell in the first time period, the first radio access network device may select, from the at least one first cell based on the quantity of terminals accessing the first cell in the first time period, a cell with a minimum quantity of terminals accessing the first cell in the first time period as the target cell, so that fewer terminals contend with the terminal to be handed over for network resources in the determined target cell. This improves the handover success rate and ensures the quality of service of the terminal in the target cell.
(2) The target cell may limit a quantity of PDU sessions to be set up due to impact of a network operation policy or the like. When a terminal is handed over to the target cell, although the target cell may allow access of the terminal, the terminal may be restricted from setting up a PDU session in the target cell. As a result, handover of the terminal fails. However, in this embodiment of this application, when the load prediction information includes the setup success rate of the PDU session in the first cell in the first time period, the first radio access network device may select, from the at least one first cell based on the setup success rate of the PDU session in the first cell in the first time period, a cell with a highest setup success rate of the PDU session in the first cell in the first time period as the target cell, so that the handover success rate may be higher when the terminal is handed over to the determined target cell.
(3) For any first cell, a handover success rate of the first cell may be learned of based on a quantity of times of successful handover and a quantity of handover failures of all terminals that are handed over from others cell to the first cell. When the first radio access network device hands over a terminal to the first cell, the handover success rate of the first cell also significantly affects whether the terminal can be successfully handed over In this embodiment of this application, when the load prediction information includes the handover success rate of the first cell in the first time period, the first radio access network device may select, from the at least one first cell based on the handover success rate of the first cell in the first time period, a cell with a highest handover success rate of the first cell in the first time period as the target cell, so that the handover success rate may also be higher when the terminal is handed over to the determined target cell.

It can be learned that in this embodiment of this application, the load prediction information can reflect at least one of the quantity of terminals accessing the first cell in the first time period, the setup success rate of the PDU session in the first cell in the first time period, and the handover success rate of the first cell in the first time period. Therefore, when the first radio access network device needs to hand over the terminal, the first radio access network device determines, in the at least one first cell based on the load prediction information of the at least one first cell from the first network device, a target cell that is to be handed over, to make the determined target cell more appropriate, thereby improving the handover success rate of the terminal, and ensuring the quality of service of the terminal.

In some embodiments, the load prediction information may include two or three of the quantity of terminals accessing the first cell in the first time period, the setup success rate of the PDU session in the first cell in the first time period, and the handover success rate of the first cell in the first time period. When determining the target cell based on the load prediction information, the first radio access network device may comprehensively consider two or three types of information included in the load prediction information.

For example, in a possible design, a priority of the load prediction information may be further configured in the first radio access network device. When the load prediction information received by the first radio access network device includes two or more (namely, three) of the quantity of terminals accessing the first cell in the first time period, the setup success rate of the PDU session in the first cell in the first time period, and the handover success rate of the first cell in the first time period, the first radio access network device may determine the target cell based on the configured priority of the load prediction information.

For example, in an implementation of this design, the priority of the load prediction information may be as follows: A priority of the handover success rate is higher than a priority of the setup success rate of the PDU session, and the priority of the setup success rate of the PDU session is higher than a priority of the quantity of terminals. In this case, the first radio access network device may first select, from the at least one first cell, a first cell with a highest handover success rate in the first time period as the target cell. If there are at least two first cells that have a same handover success rate in the first time period, the first radio access network device may select, from the at least two first cells that have a same handover success rate in the first time period, a cell with a highest setup success rate of the PDU session as the target cell, or the like. Similarly, the target cell may be further selected based on the quantity of terminals accessing the first cell in the first time period, and details are not described herein.

It should be noted that the priority of the load prediction information is merely an example for description. In another implementation of this design, the priority of the load prediction information may alternatively be set in another manner. This is not limited in this application.

For another example, in another possible design, a weight value or another weighted indicator of the load prediction information may be preset in the first radio access network device. For example, the load prediction information includes three of the quantity of terminals accessing the first cell in the first time period, the setup success rate of the PDU session in the first cell in the first time period, and the handover success rate of the first cell in the first time period. The first radio access network device may calculate a weighted average value or a sum result of the three types of load prediction information based on weight values respectively corresponding to the quantity of terminals accessing the first cell in the first time period, the setup success rate of the PDU session in the first cell in the first time period, and the handover success rate of the first cell in the first time period. Then, the first radio access network device may determine the target cell based on the weighted average value or the sum result, of the three types of load prediction information, obtained through calculation.

As described in the foregoing embodiment, the first network device may determine, by using the neural network model, the load prediction information corresponding to the first cell. A confidence level is an inherent attribute of the neural network, and can be used to indicate a reliability degree of prediction information output by the neural network. Therefore, when outputting the load prediction information corresponding to the first cell, the neural network model may also output a confidence level corresponding to the load prediction information.

Based on such an understanding, in a possible design, the load prediction information may further include the confidence level of the load prediction information.

The confidence level of the load prediction information may be used to indicate a reliability degree of the load prediction information. For example, the confidence level may be represented by a percentage, and a larger value of the confidence level indicates a higher reliability degree of the corresponding load prediction information. For example, the confidence level of the load prediction information may be expressed as 60%, 70%, 85%, or the like. For another example, the confidence level may be represented by high, medium, and low.

In this design, when determining the target cell in the at least one first cell based on the load prediction information of the at least one first cell, the first radio access network device may further consider the confidence level of the load prediction information.

Similarly, an example in which the first radio access network device receives load prediction information of a cell 1 and a cell 2 is used. If the load prediction information corresponding to the cell 1 and the load prediction information corresponding to the cell 2 are both handover success rates, and the handover success rates are the same, the first radio access network device may select, from the cell 1 and the cell 2, a cell with a highest confidence level corresponding to the load prediction information as the target cell.

In a possible design, the load prediction request may further include a load item, and the load item is used to indicate the load prediction information that the first radio access network device requests to obtain.

In other words, the load item may be used to indicate that the first radio access network device requests to obtain one or more specific types of load prediction information. For example, the load item may indicate the first network device to send, to the first radio access network device, the quantity of terminals accessing the first cell in the first time period as the load prediction information of the first cell; or may indicate the first network device to send, to the first radio access network device, the setup success rate of the PDU session in the first cell in the first time period as the load prediction information of the first cell; or may indicate the first network device to send, to the first radio access network device, the handover success rate of the first cell as the load prediction information of the first cell. Alternatively, the load item may indicate the first network device to send, to the first radio access network device, two or three of the quantity of terminals accessing the first cell in the first time period, the setup success rate of the PDU session in the first cell in the first time period, and the handover success rate of the first cell in the first time period as the load prediction information of the first cell. This is not limited herein in this application.

In some other possible designs, the target cell determining method shown in FIG. 3 may not include S301, to be specific, may not include the step in which the first radio access network device sends the load prediction request to the first network device. In this design, the first network device may actively send the load prediction information of the at least one first cell to the first radio access network device, so that the first radio access network device may determine the target cell in the at least one first cell based on the load prediction information of the at least one first cell.

For example, FIG. 6 is another schematic flowchart of a target cell determining method according to an embodiment of this application. As shown in FIG. 6, in this design, the target cell determining method may include S601 and S602.

S601: A first network device sends load prediction information of at least one first cell to a first radio access network device.

In an implementation, the first network device may actively send the load prediction information of the at least one first cell to the first radio access network device based on a specific preset periodicity. The preset periodicity may be 5 minutes, 10 minutes, 30 minutes, 60 minutes, or the like. A size of the preset periodicity is not limited in this application. In addition, for the load prediction information, refer to descriptions in the foregoing embodiment. Details are not described herein again.

In another implementation, the first network device may alternatively actively send the load prediction information of the at least one first cell to the first radio access network device when a preset trigger condition is met. For example, the first network device may continuously predict or predict, at intervals, load prediction information corresponding to a plurality of first cells. When load prediction information of a first cell is changed compared with load prediction information predicted last time, the first network device may actively send the load prediction information of the first cell to the first radio access network device. That is, in this implementation, the preset trigger condition may means that the predicted load prediction information of the first cell is changed.

Correspondingly, the first radio access network device may receive the load prediction information, of the at least one first cell, that is sent by the first network device.

S602: The first radio access network device determines a target cell in the at least one first cell based on the load prediction information of the at least one first cell.

In this design, for beneficial effects that can be achieved by the target cell determining method, refer to descriptions in the foregoing embodiment shown in FIG. 3. Details are not described herein again.

For a current problem that a handover success rate is low when a terminal is handed over to a target cell, an embodiment of this application further provides a target cell determining method, so that the handover success rate when the terminal is handed over can also be improved. The method may be applied to an application scenario in which a first radio access network device interacts with a core network device or a first radio access network device interacts with a network control device in the communication system shown in FIG. 1. For ease of description of the solution of this embodiment, both the core network device and the network control device are referred to as second network devices in the following:

In the method, the second network device may determine a cell identifier of the at least one first cell based on historical information of the terminal, and send the determined cell identifier of the at least one first cell to the first radio access network device, so that the first radio access network device can determine a target cell based on the cell identifier of the at least one first cell.

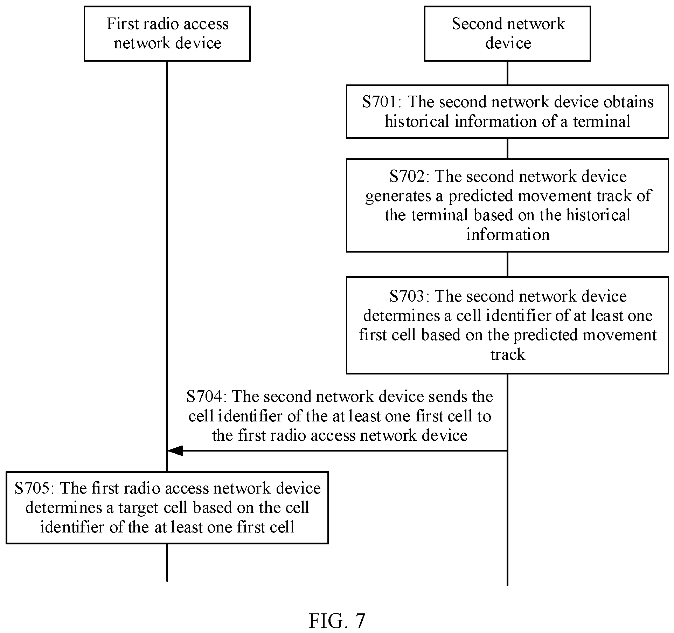

For example, FIG. 7 is still another schematic flowchart of a target cell determining method according to an embodiment of this application. As shown in FIG. 7, the target cell determining method may include S701 to S705.

S701: A second network device obtains historical information of a terminal.

S702: The second network device generates a predicted movement track of the terminal based on the historical information.

Similar to the foregoing embodiment, a trained neural network model, for example, an Alex network (AlexNet), may also be preconfigured in the second network device (a core network device or a network control device). The second network device may input the historical information of the terminal into the neural network model, and the neural network model may output the predicted movement track of the terminal based on the historical information of the terminal.

The following describes the historical information and the predicted movement track by using an example in which the second network device is the core network device.

When the terminal accesses a serving cell corresponding to a first radio access network device, the first radio access network device may collect related information of the cell accessed by the terminal, and report the information to the core network device. The information may be referred to as movement history report information of the terminal herein. The movement history report information includes mobility history information of recent access of the terminal, and may be 16 cells measured in cells. The movement history report information may be recorded by the terminal and sent to the first radio access network device. A cell included in the movement history report information may include a cell accessed by the terminal in an RRC idle (RRC idle) state, an RRC inactive state, or an RRC connected state.

Optionally, the movement history report information may further include stay duration of the terminal in the cell or stay duration of the terminal outside an NR range.

Generally, limited by storage space of the terminal, the movement history report information reported by the first radio access network device to the core network device is generally information about the cell accessed by the terminal within 48 hours.

After receiving the movement history report information reported by the first radio access network device, the core network device may perform storage. The core network device may store the information about the cell accessed by the terminal for more than 48 hours. In this application, the information, about the cell accessed by the terminal, that is stored in the core network device for more than 48 hours may be referred to as historical camping information of the terminal.

In S701, in an implementation, that the core network device obtains the historical information of the terminal may mean that the core network device receives the movement history report information reported by the first radio access network device to the core network device. Correspondingly, in S702, the core network device may generate the predicted movement track of the terminal based on the movement history report information.

In another implementation, that the core network device obtains the historical information of the terminal may mean that the core network device may obtain the historical camping information of the terminal based on the movement history report information that is reported by the first radio access network device to the core network device for a plurality of times. Correspondingly, in S702, the core network device may generate the predicted movement track of the terminal based on the historical camping information.

For example, the core network device receives movement history report information from a RAN UE NGAP ID 1 at 00:00 on April 20, 2020, and the movement history report information records mobility history information of access of the terminal from 00:00 on April 18, 2020 to 00:00 on April 20, 2020. The core network device may determine, based on a correspondence between the RAN UE NGAP ID 1 and a subscription permanent identifier (subscription permanent identifier, SUPI), the mobility history information of access of the terminal identified by the SUPI from 00:00 on April 18, 2020 to 00:00 on April 20, 2020. The SUPI is a unique permanent identity of a subscriber in a 5G network.

The core network device receives movement history report information from a RAN UE NGAP ID 2 at 00:00 on April 22, 2020, and the movement history report information records mobility history information of access of the terminal from 00:00 on April 20, 2020 to 00:00 on April 22, 2020. The core network device may determine, based on a correspondence between the RAN UE NGAP ID 2 and the SUPI, the mobility history information of access of the terminal identified by the SUPI from 00:00 on April 20, 2020 to 00:00 on April 22, 2020.

The core network device may determine, with reference to the mobility history information of access of the terminal identified by the SUPI from 00:00 on April 18, 2020 to 00:00 on April 20, 2020 and the mobility history information of access of the terminal identified by the SUPI from 00:00 on April 20, 2020 to 00:00 on April 22, 2020, mobility history information, of access of the terminal identified by the SUPI from 00:00 on April 18, 2020 to 00:00 on April 22, 2020, within a range of more than 48 hours, to obtain the historical camping information of the terminal.

Optionally, the SUPI may alternatively be a subscription concealed identifier (subscription concealed identifier, SUCI), and the SUCI is a privacy protection identifier including the SUPI.

The predicted movement track of the terminal may include the following information: an identifier of the terminal, a location of the terminal, and time. The identifier of the terminal may be a radio access network user equipment next generation application protocol identifier (radio access network user equipment next generation application protocol identifier, RAN UE NGAP ID), and may be used to uniquely identify a UE association on an NG interface in an NG-RAN node. Alternatively, the identifier of the terminal may be an AMF UE NGAP ID, and may be used to uniquely identify a UE association on an NG interface. The location of the terminal may be used to indicate information about a location at which the terminal may move into. For example, the location of the terminal may be an NR CGI, and may be used to uniquely identify a new radio cell globally; or the location of the terminal may be a PCI. The time may be used to indicate time information related to the location of the terminal. For example, the time may be start time at which the terminal enters a specific location of the terminal.

Optionally, the predicted movement track of the terminal may further include duration in which the terminal is located at the foregoing location of the terminal.

S703: The second network device determines a cell identifier of at least one first cell based on the predicted movement track.

For example, the second network device may determine, based on the location of the terminal, the identifier of the terminal, and the time that are included in the predicted movement track, of the terminal, generated in S702, the cell identifier of the at least one first cell in which the terminal may be located in a first time period.

The cell identifier may be an NR CGI, and may be used to uniquely identify a new radio cell globally; or the cell identifier may be a PCI.

S704: The second network device sends the cell identifier of the at least one first cell to the first radio access network device.

After determining the cell identifier of the at least one first cell based on the predicted movement track, the second network device may send the determined cell identifier of the at least one first cell to the first radio access network device.

For example, the second network device may actively send the cell identifier of the at least one first cell to the first radio access network device based on a preset periodicity. For example, the preset periodicity may be 5 minutes, 10 minutes, 30 minutes, 60 minutes, or the like. Alternatively, the first radio access network device may send a request for the predicted movement track to the second network device. After receiving the request, the second network device may send the cell identifier of the at least one first cell to the first radio access network device. This is not limited herein.

Correspondingly, the first radio access network device may receive the cell identifier of the at least one first cell from the second network device.

In this embodiment of this application, the cell identifier of the at least one first cell may further carry corresponding time information, and the time information may be time at which the terminal may enter the first cell corresponding to the cell identifier. Alternatively, the time information may further include duration in which the terminal may be in the first cell corresponding to the cell identifier.

S705: The first radio access network device determines a target cell based on the cell identifier of the at least one first cell.

After receiving the cell identifier of the at least one first cell from the second network device, the first radio access network device may determine the target cell in the first cell corresponding to the cell identifier of the at least one first cell.

For example, if the cell identifier received by the first radio access network device from the core network device is an NR CGI of a cell 1, and time information carried in the NR CGI of the cell 1 is 10:00 on April 20, 2020, the first radio access network device may determine the cell 1 as the target cell.

Optionally, in the target cell determining method, the first cell corresponding to the cell identifier determined by the second network device based on the predicted movement track is a cell controlled by another radio access network device.

Optionally, when receiving cell identifiers of a plurality of first cells, the first radio access network device may select the target cell from the plurality of first cells based on exchange information of the plurality of first cells interacted with a neighboring second radio access network device; or may select the target cell from the plurality of first cells based on the load prediction information, of the plurality of first cells, described in the foregoing embodiment.

For example, when the first radio access network device receives the cell identifiers of the plurality of first cells, the first radio access network device may determine the target cell in the plurality of first cells according to the target cell determining method shown in FIG. 3 and based on the load prediction information of the plurality of first cells. Details are not described herein one by one again.

As described above, in this embodiment of this application, the second network device may obtain the predicted movement track of the terminal based on the historical information of the terminal, and recommend the cell identifier of the at least one first cell to the first radio access network device based on the predicted movement track of the terminal, so that the first radio access network device can determine the target cell based on the cell identifier of the at least one first cell. When the first radio access network device hands over the terminal to the target cell determined based on the cell identifier of the at least one first cell, a handover success rate of the terminal is higher, so that quality of service of the terminal can be ensured.

Similarly, an embodiment of this application further provides a target cell determining method, so that a handover success rate of a terminal can also be improved. The method may also be applied to an application scenario in which a first radio access network device interacts with a core network device or a first radio access network device interacts with a network control device in the communication system shown in FIG. 1. A difference from the target cell determining method shown in FIG. 7 lies in that in the method, the first radio access network device may determine a cell identifier of at least one first cell based on historical information of the terminal, and determine a target cell based on the cell identifier of the at least one first cell. For ease of description of the solution of this embodiment, both the core network device and the network control device are also referred to as second network devices in the following:

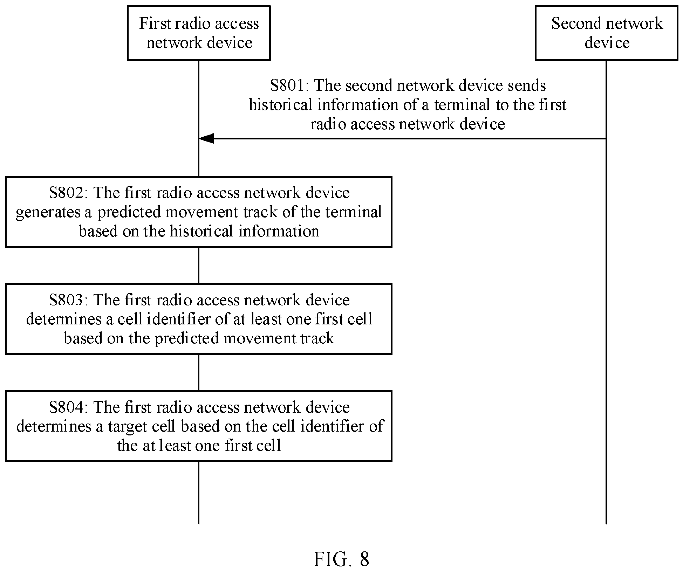

For example, FIG. 8 is still another schematic flowchart of a target cell determining method according to an embodiment of this application. As shown in FIG. 8, the target cell determining method may include S801 to S804.

S801: A second network device sends historical information of a terminal to a first radio access network device.

In this embodiment, the historical information of the terminal may be historical camping information. For related explanations of the historical camping information, refer to descriptions in the embodiment shown in FIG. 7, and details are not described herein again.

For example, the second network device is a core network device. The core network device may actively send the historical information of the terminal to the first radio access network device, for example, may periodically send the historical information. Alternatively, the core network device may send the historical information of the terminal to the first radio access network device in a query-response manner. For example, the first radio access network device may send a query request for the historical information of the terminal to the core network device, to query historical information of a RAN UE NGAP ID 3. After receiving the query request, the core network device may obtain, based on a correspondence between the RAN UE NGAP ID 3 and an SUPI, the historical camping information of the terminal identified by the SPUI corresponding to the RAN UE NGAP ID 3, and send the historical camping information to the first radio access network device.

Correspondingly, the first radio access network device may receive the historical information of the terminal from the second network device.

S802: The first radio access network device generates a predicted movement track of the terminal based on the historical information.

The predicted movement track is the same as the predicted movement track in the embodiment shown in FIG. 7, and a difference lies only in that the predicted movement track in this embodiment is generated by the first radio access network device, while the predicted movement track in the embodiment shown in FIG. 7 is generated by the second network device. Details are not described herein again.

S803: The first radio access network device determines a cell identifier of at least one first cell based on the predicted movement track.

S804: The first radio access network device determines a target cell based on the cell identifier of the at least one first cell.

After determining the cell identifier of the at least one first cell based on the predicted movement track, the first radio access network device may determine, based on the determined cell identifier of the at least one first cell, the target cell in the first cell corresponding to the cell identifier of the at least one first cell.

Optionally, in the target cell determining method, the first cell corresponding to the cell identifier determined by the first radio access network device based on the predicted movement track is a cell controlled by another radio access network device.

Similar to the embodiment shown in FIG. 7, if the first radio access network device determines a cell identifier of only one first cell, the first radio access network device may directly determine the first cell corresponding to the cell identifier as the target cell. If the first radio access network device determines only cell identifiers of a plurality of first cells, the first radio access network device may select the target cell from the plurality of first cells based on exchange information of the plurality of first cells interacted with a neighboring second radio access network device; or may select the target cell from the plurality of first cells based on the load prediction information, of the plurality of first cells, described in the foregoing embodiment. Details are not described herein again.

In a possible design, the first radio access network device may not obtain the historical information from the second network device, but directly generate the predicted movement track of the terminal based on movement history report information of the terminal in a current serving cell, determine the cell identifier of the at least one first cell based on the predicted movement track, and further determine the target cell based on the cell identifier of the at least one first cell.

In comparison with this design, in the embodiment shown in FIG. 8, the predicted movement track of the terminal generated by the first radio access network device based on the historical information (the historical camping information) of the terminal that is sent by the second network device to the first radio access network device is more accurate, and can better comply with an actual movement track of the terminal.

It may be understood that, in this application, based on descriptions in any one of the foregoing method embodiments, after determining the target cell, the first radio access network device may further hand over the terminal to the target cell.

The foregoing mainly describes the solutions provided in embodiments of this application from a perspective of interaction between network elements. It may be understood that, to implement the foregoing functions, each network element, for example, the first radio access network device, the first network device (the second radio access network device, the core network device, or the network control device), or the second network device (the core network device or the network control device), includes a corresponding hardware structure and/or software module for performing each function.

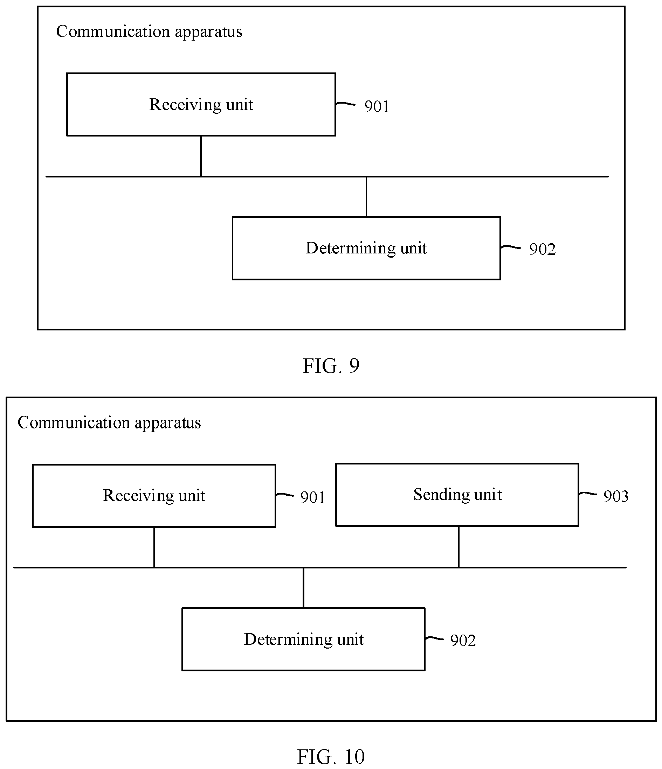

For example, an embodiment of this application may further provide a communication apparatus that may be used in a first radio access network device. FIG. 9 is a schematic diagram of a structure of a communication apparatus according to an embodiment of this application.

As shown in FIG. 9, the communication apparatus may include: a receiving unit 901, configured to receive load prediction information of at least one first cell from a first network device, where the first cell is a cell controlled by another radio access network device; and the load prediction information includes at least one of a quantity of terminals accessing the first cell in a first time period, a setup success rate of a PDU session in the first cell in the first time period, and a handover success rate of the first cell in the first time period; and a determining unit 902, configured to determine a target cell in the at least one first cell based on the load prediction information of the at least one first cell.

In a possible design, when the load prediction information includes two or more of the quantity of terminals accessing the first cell in the first time period, the setup success rate of the protocol data unit PDU session in the first cell in the first time period, and the handover success rate of the first cell in the first time period, the determining unit 902 may preferentially select, based on preconfigured priorities of different load prediction information, load prediction information with a higher priority as a determining basis for determining the target cell in the at least one first cell.

In a possible design, the load prediction information further includes a confidence level of the load prediction information.

In a possible design, the first network device is any one of a core network device, a second radio access network device, and a network control device.

FIG. 10 is a schematic diagram of another structure of a communication apparatus according to an embodiment of this application.

As shown in FIG. 10, in a possible design, the communication apparatus may further include: a sending unit 903, configured to send a load prediction request to a first network device, where the load prediction request includes a first time period.

Correspondingly, a receiving unit 901 may be specifically configured to receive load prediction information, of at least one first cell, that is sent by the first network device based on the load prediction request.

In a possible design, the load prediction request further includes a cell identifier of the at least one first cell.

In a possible design, the load prediction request further includes a load item, and the load item is used to indicate the load prediction information that the sending unit 903 requests to obtain.

In another possible design, the receiving unit 901 may be specifically configured to receive the load prediction information, of the at least one first cell, that is actively sent by the first network device.

For example, the receiving unit 901 may be specifically configured to receive the load prediction information, of the at least one first cell, that is actively sent by the first network device based on a preset periodicity.

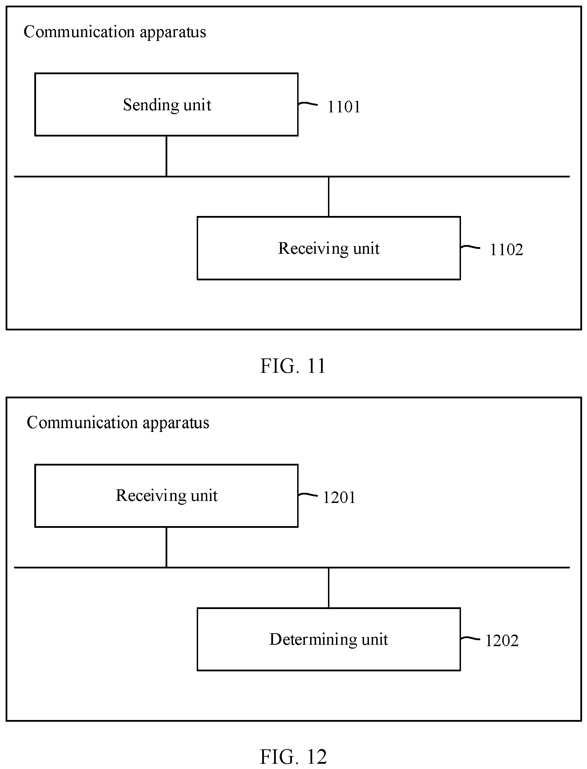

Correspondingly, an embodiment of this application further provides a communication apparatus that may be used in a first network device. FIG. 11 is a schematic diagram of still another structure of a communication apparatus according to an embodiment of this application.

As shown in FIG. 11, the communication apparatus may include: a sending unit 1101, configured to send load prediction information of at least one first cell to a first radio access network device, so that the first radio access network device determines a target cell in the at least one first cell based on the load prediction information of the at least one first cell, where the first cell is a cell controlled by another radio access network device; and the load prediction information includes at least one of a quantity of terminals accessing the first cell in a first time period, a setup success rate of a PDU session in the first cell in the first time period, and a handover success rate of the first cell in the first time period.

Still refer to FIG. 11. The apparatus further includes: a receiving unit 1102, configured to receive a load prediction request from the first radio access network device, where the load prediction request includes the first time period.

Correspondingly, the sending unit 1101 may be specifically configured to send the load prediction information of the at least one first cell to the first radio access network device based on the load prediction request.

In a possible design, the load prediction request further includes a cell identifier of the at least one first cell.

In a possible design, the load prediction request further includes a load item, and the load item is used to indicate the load prediction information that the first radio access network device requests to obtain.

In a possible design, the sending unit 1101 may be specifically configured to actively send the load prediction information of the at least one first cell to the first radio access network device.

For example, the sending unit 1101 may actively send the load prediction information of the at least one first cell to the first radio access network device based on a preset periodicity.

An embodiment of this application may further provide a communication apparatus that may be used in a first radio access network device. FIG. 12 is a schematic diagram of still another structure of a communication apparatus according to an embodiment of this application.

As shown in FIG. 12, the communication apparatus may include: a receiving unit 1201, configured to receive a cell identifier of at least one first cell from a second network device; and a determining unit 1202, configured to determine a target cell based on the cell identifier of the at least one first cell.

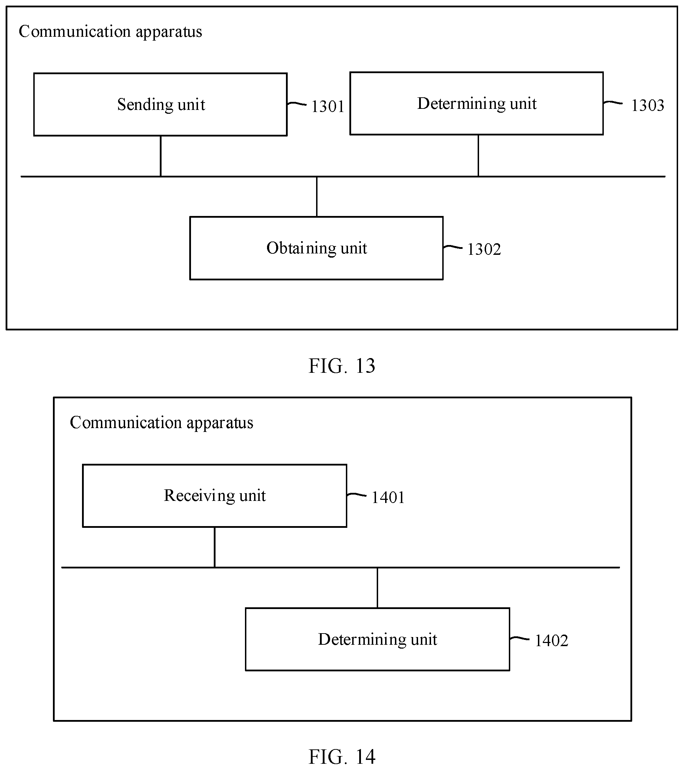

Correspondingly, an embodiment of this application may further provide a communication apparatus that may be used in a second network device. FIG. 13 is a schematic diagram of still another structure of a communication apparatus according to an embodiment of this application.

As shown in FIG. 13, the communication apparatus may include: a sending unit 1301, configured to send a cell identifier of at least one first cell to a first radio access network device, so that the first radio access network device determines a target cell based on the cell identifier of the at least one first cell.

Still refer to FIG. 13. The apparatus further includes: an obtaining unit 1302, configured to obtain historical information of a terminal; and a determining unit 1303, configured to determine the cell identifier of the at least one first cell based on the historical information.

In a possible design, the determining unit 1303 may be specifically configured to: generate a predicted movement track of the terminal based on the historical information, and determine the cell identifier of the at least one first cell based on the predicted movement track.

An embodiment of this application may further provide a communication apparatus that may be used in a first radio access network device. FIG. 14 is a schematic diagram of still another structure of a communication apparatus according to an embodiment of this application.

As shown in FIG. 14, the communication apparatus may include: a receiving unit 1401, configured to receive historical information of a terminal from a second network device; and a determining unit 1402, configured to: determine a cell identifier of at least one first cell based on the historical information, and determine a target cell based on the cell identifier of the at least one first cell.

In a possible design, the determining unit 1402 may be specifically configured to: generate a predicted movement track of the terminal based on the historical information, and determine the cell identifier of the at least one first cell based on the predicted movement track.

Correspondingly, an embodiment of this application may further provide a communication apparatus used in a second network device. The apparatus may include: a sending unit, configured to send historical information of a terminal to the second network device.

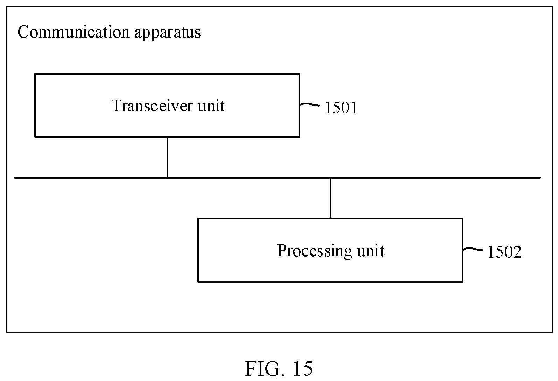

Optionally, an embodiment of this application further provides a communication apparatus. The communication apparatus may be used in any one of the first radio access network device, the first network device, and the second network device. FIG. 15 is a schematic diagram of still another structure of a communication apparatus according to an embodiment of this application.

As shown in FIG. 15, the communication apparatus may include: a transceiver unit 1501 and a processing unit 1502. The transceiver unit 1501 may be configured to send and receive information, or configured to communicate with another network element. The processing unit 1502 may be configured to process data.

When the communication apparatus is used in a first radio access network device, the transceiver unit 1501 and the processing unit 1502 may be used to implement the method performed by the first radio access network device in the foregoing embodiments.

When the communication apparatus is used in a first network device (any one of a second radio access network device, a core network device, and a network control device), the transceiver unit 1501 and the processing unit 1502 may be used to implement the method performed by the first network device in the foregoing embodiments.

When the communication apparatus is used in a second network device, the transceiver unit 1501 and the processing unit 1502 may be used to implement the method performed by the second network device in the foregoing embodiments.

It should be understood that division into the units in the apparatus is merely logical function division. During actual implementation, all or a part of the units may be integrated into one physical entity or may be physically separated. In addition, all the units in the apparatus may be implemented in a form of software invoked by a processing element, or may be implemented in a form of hardware; or a part of units may be implemented in a form of software invoked by a processing element, and a part of units may be implemented in a form of hardware.

For example, each unit may be an independently disposed processing element, or may be integrated into a chip of the apparatus for implementation. In addition, each unit may alternatively be stored in a memory in a form of a program to be invoked by a processing element of the apparatus to perform a function of the unit. In addition, the units may be all or partially integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, any one of the foregoing units in the apparatus may be one or more integrated circuits configured to implement the foregoing methods, for example, one or more ASICs, one or more DSPs, one or more FPGAs, or a combination of at least two of the integrated circuit forms.

For another example, when the units in the apparatus may be implemented in a form of a program invoked by a processing element, the processing element may be a general-purpose processor, for example, a CPU or another processor that can invoke the program. For still another example, the units may be integrated and implemented in a form of a system-on-a-chip (system-on-a-chip, SOC).

The foregoing unit for receiving is an interface circuit or an input circuit of the apparatus, and is configured to receive a signal from another apparatus. For example, when the apparatus is implemented by using a chip, the receiving unit is an interface circuit or an input circuit used by the chip to receive a signal from another chip or apparatus. When the communication apparatus includes a unit for sending, the unit for sending is an interface circuit or an output circuit of the apparatus, and is configured to send a signal to another apparatus. For example, when the apparatus is implemented by using a chip, the sending unit is an interface circuit or an output circuit used by the chip to send a signal to another chip or apparatus.

For example, an embodiment of this application may further provide a communication apparatus, which may be used in any one of the first radio access network device, the first network device, and the second network device. The communication apparatus may include a processor and an interface circuit. There may be one or more processors

When the communication apparatus is used in the first radio access network device, the processor is configured to: communicate with another apparatus through the interface circuit, and perform the steps performed by the first radio access network device in the foregoing methods.

When the communication apparatus is used in the first network device, the processor is configured to: communicate with another apparatus through the interface circuit, and perform the steps performed by the first network device in the foregoing methods.

When the communication apparatus is used in the second network device, the processor is configured to: communicate with another apparatus through the interface circuit, and perform the steps performed by the second network device in the foregoing methods.

In an implementation, units of the first radio access network device, the first network device, or the second network device for separately implementing the corresponding steps in the foregoing methods may be implemented in a form of a processing element scheduling a program. For example, the apparatus used in the first radio access network device, the first network device, or the second network device may include a processing element and a storage element. The processing element invokes a program stored in the storage element, to perform the method performed by the first radio access network device, the first network device, or the second network device in the foregoing method embodiments. The storage element may be a storage element located on a same chip as the processing element, namely, an on-chip storage element.

In another implementation, a program used to perform the method performed by the first radio access network device, the first network device, or the second network device in the foregoing methods may be in a storage element that is located on a chip different from the processing element, namely, an off-chip storage element. In this case, the processing element invokes or loads the program from the off-chip storage element to the on-chip storage element, to invoke and perform the method performed by the first radio access network device, the first network device, or the second network device in the foregoing method embodiments.

For example, an embodiment of this application may further provide a communication apparatus. The communication apparatus may include a processor, configured to execute computer instructions stored in a memory. When the computer instructions are executed, the apparatus is enabled to perform the method performed by the first radio access network device, the first network device, or the second network device. The memory may be located inside the communication apparatus, or may be located outside the communication apparatus. There are one or more processors

In still another implementation, units of the first radio access network device, the first network device, or the second network device for implementing the steps in the foregoing methods may be configured as one or more processing elements. These processing elements may be disposed on the corresponding first radio access network device, the corresponding first network device, or the corresponding second network device. The processing element herein may be an integrated circuit, for example, one or more ASICs, one or more DSPs, one or more FPGAs, or a combination of these types of integrated circuits. These integrated circuits may be integrated together to form a chip.

The units of the first radio access network device, the first network device, or the second network device for implementing the steps in the foregoing methods may be integrated together and implemented in a form of an SOC. The SOC chip is configured to implement the corresponding methods. At least one processing element and storage element may be integrated into the chip, and the processing element invokes a program stored in the storage element to implement the corresponding method. Alternatively, at least one integrated circuit may be integrated into the chip, to implement the corresponding method. Alternatively, with reference to the foregoing implementations, functions of a part of units may be implemented by invoking a program by the processing element, and functions of a part of units may be implemented by the integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of a plurality of storage elements.

For example, an embodiment of this application further provides a chip system. The chip system may be applied to any one of the first radio access network device, the first network device, and the second network device. The chip system includes one or more interface circuits and one or more processors. The interface circuit and the processor are interconnected through a line. The processor receives computer instructions from a memory of an electronic device through the interface circuit and executes the computer instructions, to implement the method performed by the corresponding first radio access network device, the corresponding first network device, or the corresponding second network device in the foregoing method embodiments.

The foregoing descriptions about implementations allow a person skilled in the art to understand that, for the purpose of convenient and brief description, division of the foregoing functional modules is used as an example for illustration. During actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate components may or may not be physically separate, and components displayed as units may be one or more physical units. To be specific, the components may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product, for example, a program. The software product is stored in a program product, for example, a computer-readable storage medium, and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

For example, an embodiment of this application may further provide a computer-readable storage medium. The computer-readable storage medium includes computer software instructions. When the computer software instructions are run on a first radio access network device or a chip built in the first radio access network device, the first radio access network device is enabled to perform the method performed by the first radio access network device in the foregoing embodiments.

Alternatively, when the computer software instructions are run on a first network device or a chip built in the first network device, the first network device is enabled to perform the method performed by the first network device in the foregoing embodiments.

Alternatively, when the computer software instructions are run on a second network device or a chip built in the second network device, the second network device is enabled to perform the method performed by the second network device in the foregoing embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A target cell determining method, wherein the method comprises:
receiving, by a first radio access network device, load prediction information of at least one first cell from a first network device, wherein the first cell is a cell controlled by another radio access network device; and the load prediction information comprises at least one of a quantity of terminals accessing the first cell in a first time period, a setup success rate of a protocol data unit PDU session in the first cell in the first time period, and a handover success rate of the first cell in the first time period; and
determining, by the first radio access network device, a target cell in the at least one first cell based on the load prediction information of the at least one first cell.

2. The method according to claim 1, wherein the load prediction information further comprises a confidence level of the load prediction information.

3. The method according to claim 1 or 2, wherein the first network device is any one of a core network device, a second radio access network device, and a network control device.

4. The method according to any one of claims 1 to 3, wherein before the receiving, by a first radio access network device, load prediction information of at least one first cell from a first network device, the method further comprises:
sending, by the first radio access network device, a load prediction request to the first network device, wherein the load prediction request comprises the first time period.

5. The method according to claim 4, wherein the load prediction request further comprises a cell identifier of the at least one first cell.

6. The method according to claim 4 or 5, wherein the load prediction request further comprises a load item, and the load item is used to indicate the load prediction information that the first radio access network device requests to obtain.

7. A target cell determining method, wherein the method comprises:
sending, by a first network device, load prediction information of at least one first cell to a first radio access network device, so that the first radio access network device determines a target cell in the at least one first cell based on the load prediction information of the at least one first cell, wherein the first cell is a cell controlled by another radio access network device; and the load prediction information comprises at least one of a quantity of terminals accessing the first cell in a first time period, a setup success rate of a protocol data unit PDU session in the first cell in the first time period, and a handover success rate of the first cell in the first time period.

8. The method according to claim 7, wherein the load prediction information further comprises a confidence level of the load prediction information.

9. The method according to claim 7 or 8, wherein the first network device is any one of a core network device, a second radio access network device, and a network control device.

10. The method according to any one of claims 7 to 9, wherein before the sending, by a first network device, load prediction information of at least one first cell to a first radio access network device, the method further comprises:
receiving, by the first network device, a load prediction request from the first radio access network device, wherein the load prediction request comprises the first time period.

11. The method according to claim 10, wherein the load prediction request further comprises a cell identifier of the at least one first cell.

12. The method according to claim 10 or 11, wherein the load prediction request further comprises a load item, and the load item is used to indicate the load prediction information that the first radio access network device requests to obtain.

13. A communication apparatus, comprising:
a receiving unit, configured to receive load prediction information of at least one first cell from a first network device, wherein the first cell is a cell controlled by another radio access network device; and the load prediction information comprises at least one of a quantity of terminals accessing the first cell in a first time period, a setup success rate of a protocol data unit PDU session in the first cell in the first time period, and a handover success rate of the first cell in the first time period; and
a determining unit, configured to determine a target cell in the at least one first cell based on the load prediction information of the at least one first cell.

14. The apparatus according to claim 13, wherein the load prediction information further comprises a confidence level of the load prediction information.

15. The apparatus according to claim 13 or 14, wherein the first network device is any one of a core network device, a second radio access network device, and a network control device.

16. The apparatus according to any one of claims 13 to 15, further comprising:
a sending unit, configured to send a load prediction request to the first network device, wherein the load prediction request comprises the first time period.

17. The apparatus according to claim 16, wherein the load prediction request further comprises a cell identifier of the at least one first cell.

18. The apparatus according to claim 16 or 17, wherein the load prediction request further comprises a load item, and the load item is used to indicate the load prediction information that the sending unit requests to obtain.

19. A communication apparatus, comprising:
a sending unit, configured to send load prediction information of at least one first cell to a first radio access network device, so that the first radio access network device determines a target cell in the at least one first cell based on the load prediction information of the at least one first cell, wherein the first cell is a cell controlled by another radio access network device; and the load prediction information comprises at least one of a quantity of terminals accessing the first cell in a first time period, a setup success rate of a protocol data unit PDU session in the first cell in the first time period, and a handover success rate of the first cell in the first time period.

20. The apparatus according to claim 19, wherein the load prediction information further comprises a confidence level of the load prediction information.

21. The apparatus according to claim 19 or 20, wherein the apparatus is any one of a core network device, a second radio access network device, and a network control device.

22. The apparatus according to any one of claims 19 to 21, wherein the apparatus further comprises:
a receiving unit, configured to receive a load prediction request from the first radio access network device, wherein the load prediction request comprises the first time period.

23. The apparatus according to claim 22, wherein the load prediction request further comprises a cell identifier of the at least one first cell.

24. The apparatus according to claim 22 or 23, wherein the load prediction request further comprises a load item, and the load item is used to indicate the load prediction information that the first radio access network device requests to obtain.

25. A communication apparatus, comprising: a processor, configured to execute computer instructions stored in a memory, wherein when the computer instructions are executed, the apparatus is enabled to perform the method according to any one of claims 1 to 6.

26. A communication apparatus, comprising: a processor, configured to execute computer instructions stored in a memory, wherein when the computer instructions are executed, the apparatus is enabled to perform the method according to any one of claims 7 to 12.

27. A communication apparatus, comprising a processor and an interface circuit, wherein the processor is configured to: communicate with another apparatus through the interface circuit, and perform the method according to any one of claims 1 to 6.

28. A communication apparatus, comprising a processor and an interface circuit, wherein the processor is configured to: communicate with another apparatus through the interface circuit, and perform the method according to any one of claims 7 to 12.

29. A computer-readable storage medium, comprising computer software instructions, wherein
when the computer software instructions are run on a first radio access network device or a chip built in the first radio access network device, the first radio access network device is enabled to perform the method according to any one of claims 1 to 6.

30. A computer-readable storage medium, comprising computer software instructions, wherein
when the computer software instructions are run on a first network device or a chip built in the first network device, the first network device is enabled to perform the method according to any one of claims 7 to 12.
